# EUROPEAN PATENT APPLICATION

(11) **EP 1 942 669 A1**
(43) Date of publication of application: **09.07.2008**
(21) Application number: 07000221.7
(22) Date of filing: 08.01.2007
(51) Int. Cl.: H04N 5/64, H04R 1/02

(54) **Electronic device**

(71) Applicant: Shenzhen TCL New Technology Ltd., Nanshan District Shenzhen Guangdong 518067 (CN)
(72) Inventor: Sperle, Cornelius, 49350 Le Thoureil (FR); Evenisse, Michel, 49140 Fontaine-Milon (FR); Allaire, Christian, 49800 La Daguenière (FR)
(74) Representative: Frese-Göddeke, Beate

(57) **Abstract**

An electronic device, such as a television set, with a cabinet (1) and with at least one speaker enclosure (2) which is connected to the cabinet (1) by connection means and by elastic means. The speaker enclosure (2) is floatingly suspended by the elastic means, which suspends the speaker enclosure (2) and which are connected to the cabinet (1) by the connection means.

## Description

### BACKGROUND OF THE INVENTION

### FIELD OF THE INVENTION

The present invention is related to an electronic device, such as a television set, according to the preamble of claim 1. Electronic devices with at least one speaker enclosure are used for TV sets, TV apparatuses or portable TV apparatuses and for computer assemblies.

### DESCRIPTION OF THE PRIOR ART

An electronic device used for a television receiver is described by the Patent Abstract of Japan JP2003-134421A. The television receiver comprises a cabinet and a speaker enclosure, mentioned as a speaker. In order to prevent a transmission of vibrations from the speaker to the cabinet specific connection means and elastic means are provided. The connection means comprise a speaker positioning part, used to position the speaker, and a plurality of projection parts in the vicinity of the speaker positioning part on the cabinet. The elastic means are generated by at least one fixation band, which has holes at both ends and which is hooked to the projection parts of the connection means. The fixation band fixes the speaker by pressing it from behind and against the cabinet.

The Patent Abstract of Japan JP08116582A describes a fixing structure for a speaker, which presses the speaker unit to a side wall by an additional elastic piece.

By pressing the speaker against the cabinet a certain amount of speaker vibrations can still be transmitted to the cabinet.

A solution for preventing a transmission of vibrations from the speaker enclosure to the cabinet, which provides buffering means between the speaker enclosure and the cabinet, is known by the Patent Abstract of Japan JP2002-252892A.

The WO 9522015A describes vibration damping devices, which includes damping plates and which dissipate the vibration energy as heat.

The solutions mentioned above need additional means, such as an elastic piece, buffering means and damping devices, in addition to the connection means.

Connection means, mentioned as a speaker fixer, are known by the Patent Abstract of Japan JP2003-153127A. The speaker fixer has a holding part with an elastic member, used to tightly cover either one part of the speaker, or the entire speaker except for the sound discharge part. By deforming the elastic member the speaker is freely attached to and detached from the holding part. The elastic member needs a lot of space to cover the speaker. In addition, the elastic member, which covers the speaker, generates an acoustic cavity with standing waves. As a result, this cavity could vibrate by air born transmission and transfer vibrations to the cabinet. Such a cavity also reduces the acoustic performance.

### SUMMARY OF THE INVENTION

It is therefore desirable to improve an electronic device, such as a television set, according to the preamble of claim 1, with respect to the connection of its at least one speaker enclosure to its cabinet. A transmission of vibrations from the speaker enclosure should be completely prevented.

According to the invention this can be achieved by the features of claim 1.

An electronic device of the invention, such as a television set, comprises a cabinet and at least one speaker enclosure which is connected to the cabinet by connection means and by elastic means. According to the invention the speaker enclosure is floatingly suspended by the elastic means, which suspend the speaker enclosure and which are connected to the cabinet by the connection means. The elastic means comprise one or more elastic elements, which are connected to the speaker enclosure at one of their parts and which are connected to connection means with other parts in a way that the weight of the speaker enclosure is carried by the elastic elements and elastically transferred to the connection means. As a result, the speaker enclosure is suspended by the elastic means and floats in the cabinet.

A speaker enclosure, which is floatingly suspended by the elastic means, does not transfer any vibration to the cabinet. A transmission of vibrations from the speaker enclosure is completely prevented.

Possible advantageous developments of the invention are specified in the dependent claims.

The elastic means can comprise at least one elastic band, which can surround with at least an essential portion the speaker enclosure and which can be connected to the connection means. At the same time the elastic band can be tightened by the connection means. As a result, the speaker enclosure is suspended by the elastic band to the connection means and floats in the cabinet.

In one embodiment of the invention a single elastic band can be provided, which suspends the speaker enclosure by surrounding it and which is tightened and connected to the cabinet by the connection means.

As an alternative, the elastic means can comprise an inner elastic band, which suspends the speaker enclosure by surrounding it, and an outer elastic band, which is connected to the inner elastic band and which is tightened and connected to the cabinet by the connection means.

The connection means can comprise tension elements, which tighten the elastic means and which project from the cabinet. They can be generated by projection pins. In addition, the connection means can comprise supporting elements for the elastic means, such as spacers guiding an elastic band, which are arranged on or to the tension elements. The supporting elements can provide a fixation of the elastic means to the connection means without interfering with the floating of the speaker enclosure.

The single elastic band or the outer elastic band can comprise at least one guiding element and the connection means can comprise at least one tracking element, which project from the wall and corresponds to the guiding element. A guiding element can be generated by a loop of the corresponding elastic band and a tracking element can be generated by a projection bar. Guiding and tracking elements secure the speaker enclosure during the transport.

The elastic means, such as the elastic bands, can be made by elastic soft rubber belts. In particular, the elastic means, such as the outer elastic band or both of the inner and outer elastic bands, can be generated as one piece by injection moulding of an elastomer.

The speaker enclosure can comprise a circumferential groove, which guides the surrounding elastic band.

### BRIEF DESCRIPTION OF THE DRAWINGS

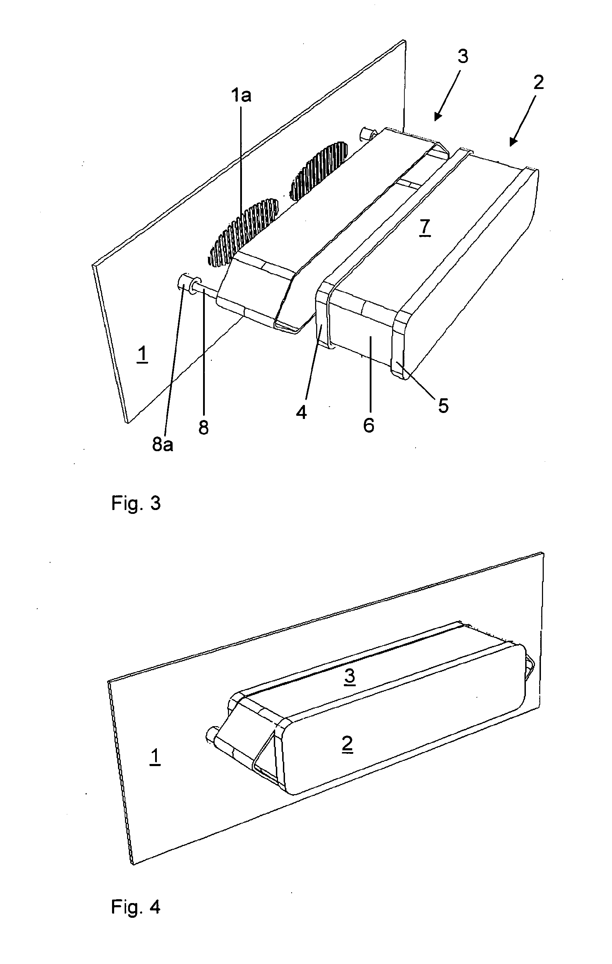

The invention will be explained in more detail using three embodiments, which are illustrated in figures 1 to 8.

It shows:
Figure 1, a simplified perspective view of the single elastic band of the first embodiment of an electronic device;
Figure 2, a simplified perspective view of the speaker enclosure, which shows the front of the speaker enclosure;
Figure 3, a simplified exploded view of the cabinet, of the single elastic band and the speaker enclosure of the first embodiment;
Figure 4, a simplified perspective view of floatingly suspended speaker enclosure of the first embodiment;
Figure 5, a simplified perspective view of the single elastic band of the second embodiment of an electronic device;
Figure 6, a simplified exploded view of the cabinet, of the single elastic band and the speaker enclosure of the second embodiment;
Figure 7, a simplified perspective view of floatingly suspended speaker enclosure of the second embodiment;
Figure 8, a simplified perspective view of the single elastic band of the third embodiment of an electronic device.

### DETAILED DESCRIPTION OF A FIRST EMBODIMENT OF THE INVENTION

An electronic device of a first embodiment of the invention, such as a television set, comprises a cabinet 1 and at least one speaker enclosure 2, which is connected to the cabinet 1 by connection means and by elastic means.

According to the invention the speaker enclosure is floatingly suspended by one single elastic band 3 of the elastic means.

The speaker enclosure 2 is shaped as a longish cuboid. It has a front cover 4 and a back cover 5, which are rectangular shaped, and four side covers 6 between the both. Two elliptical speaker openings 2a are arranged side by side along the long side of the front cover 4. The front cover 4 and the back cover 5 project the side covers 6 and, as a result, generate a circumferential groove 7 of the speaker enclosure 2. The cabinet 1 comprises openings 1a corresponding to the openings 2a of the speaker enclosure 2.

The elastic band 3 is generated as an endless band, of which width corresponds to the width of the groove 7, i.e. in this embodiment to the distance between the front cover 4 and the back cover 5. The elastic band 3 surrounds the speaker enclosure 2 and is guided in the groove 7.

The length of the elastic band 3 is longer than the circumference of the groove 7 in order to tighten the elastic band 3 by the connection means at a certain distance of the speaker enclosure 2.

The elastic band 3 is tightened by tension elements of the connection elements, which are generated as two projection pins 8 projecting from the cabinet 1.

The projection pins 8 are arranged vis-à-vis at the broadsides of the speaker enclosure 2 and between the speaker enclosure 2 and the elastic band 3. The projection pins 8 are provided with spacers 8a at its ends on the cabinet 1 in order to secure a certain distance between the cabinet 1 and the elastic band 3 with the speaker enclosure 2. The distance is greater than the thickness of the front cover 4.

The distance between the two projection pins 8 is slightly longer than the longitudinal side of the speaker enclosure 2. In reference to the elastic band 3, this distance is so long that the elastic band 3, which surrounds the speaker enclosure 2, is tightened. At the same time the elastic band 3 is connected to the cabinet 1 by the projection pins 8.

The elastic band 3 is made by an elastic soft rubber belt. It is generated as one piece by an injection moulding of an elastomer.

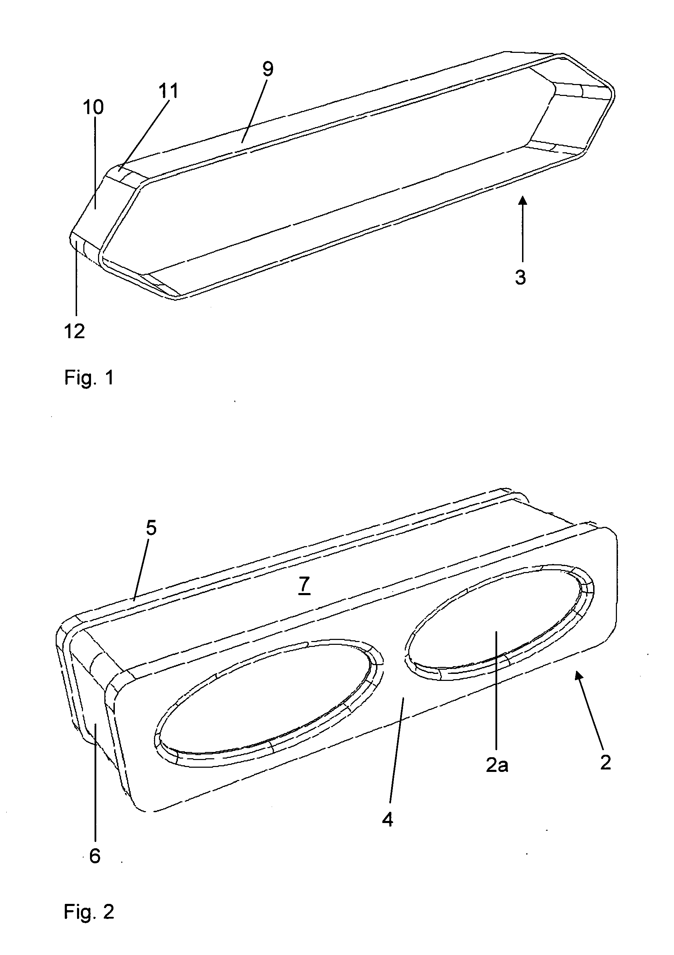

The elastic band 3, fitted to the speaker enclosure 2, has two parallel surfaces 9, which expend along the longer sides of the speaker enclosure 2, and two angled surfaces 10, which are arranged vis-à-vis in the region of the protection pins 8. The parallel surfaces 9 pass into the angled surfaces 10 by edges 11. Each angled surface 10 comprises two sides connected by an edge 12, in which the corresponding projection pin 8 is arranged. This is best seen in figure 1. The angle between the sides of the angled surfaces 10 can be between 120 and 60°, e.g. 90°.

As a result, the elastic band 3 is tightened and the speaker enclosure 2 is floatingly suspended in the cabinet 1. The openings 2a of the speaker enclosure 2 are arranged in front of the corresponding openings 1a of the cabinet 1.

As an alternative, the groove 7 of the speaker enclosure 2 can be generated by the side covers 6 itself.

### DETAILED DESCRIPTION OF A SECOND EMBODIMENT OF THE INVENTION

An electronic device of a second embodiment of the invention corresponds in all ways to an electronic device of a first embodiment, except for the following features:

The single elastic band 3 comprises stabilisation elements 13, 14, 15, which are generated by additional sections of the elastic band 3. In the region of each angled surface 10 one stabilisation element 13 generates an inner surface, which is arranged rectangular to the two parallel surfaces 9 and connects the both. This inner surface is guided in the groove 7 of the speaker enclosure 2 as well. Another stabilisation element 14 generates a cylindrical surface in the edge 12 and surrounds the corresponding projection pin 8. A third stabilisation element 15 generates a surface, which is parallel to the surfaces 9 and connects both of the other stabilisation elements 14, 13, i.e. the cylindrical surface with the inner surface at its middle.

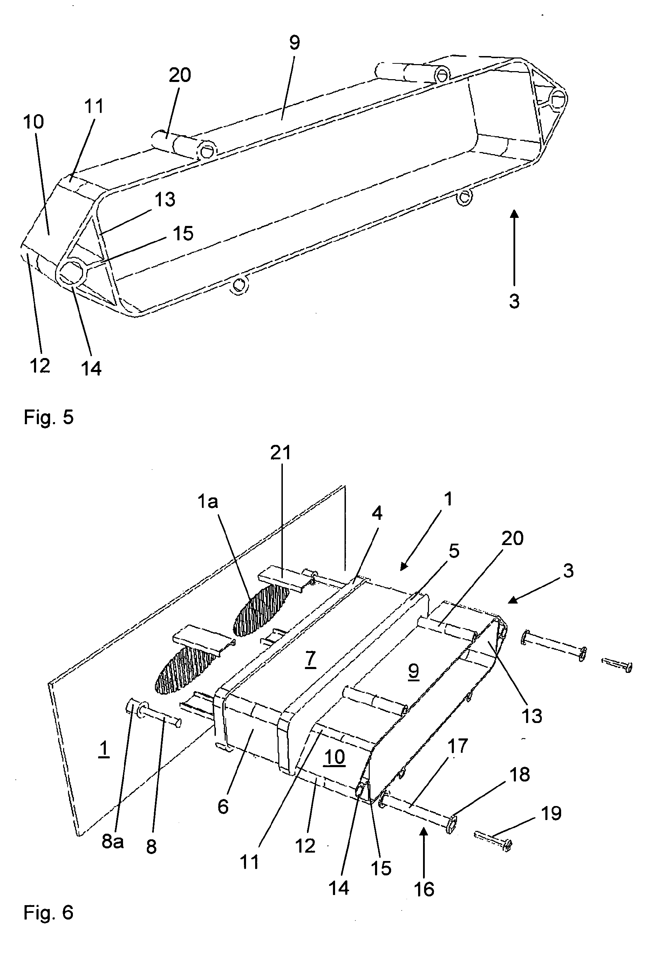

The connection means comprise supporting elements, which are generated as two supporting spacers 16. The supporting sleeves 16 are arranged to the tension elements, namely over the projection pins 8. In particular, they are arranged between the projection pins 8 and the stabilisation elements 14 generating the cylindrical surfaces. Each supporting sleeve 16 has a circumferential groove 17, which is generated by two collars 18 at both ends and which guides the elastic band 3, in particular the cylindrical surface of the stabilisation element 14. The connection means also comprise two screws 19 for fixing the supporting sleeves 16 on the projections pins 8, which are provided with corresponding threads. This is best seen in figures 5 and 6.

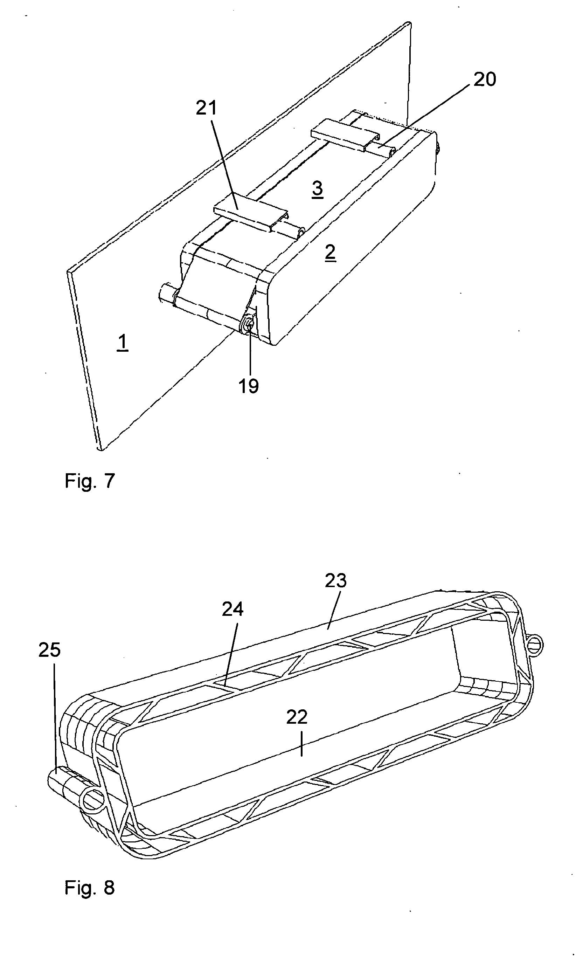

The single elastic band 3 comprises four guiding elements 20 and the connection means comprise four tracking elements 21, which project from the cabinet 1 and correspond to the guiding elements 20. Two of the guiding and tracking elements 20, 21 are arranged at the outer sides, at each of the parallel surfaces 9 of the elastic band 3. The guiding elements 20 are generated by sections of the elastic band 3, e.g. by a loop of the elastic band 3. The guiding elements 20 generate cylindrical surfaces. The tracking elements 21 are generated by U-shaped projection bars, in which the guiding elements 20 are guided. This is best seen in figure 7.

### DETAILED DESCRIPTION OF A THIRD EMBODIMENT OF THE INVENTION

An electronic device of a third embodiment of the invention corresponds in all ways to an electronic device of a first embodiment, except for the following features:

The elastic means comprise an inner elastic band 22 and an outer elastic band 23. The inner elastic band 22 suspends the speaker enclosure 2 by surrounding it completely. The inner elastic band 22, which has a rectangular shape corresponding to the speaker enclosure 2, is guided in the groove 7 of the speaker enclosure 2. The outer elastic band 23, which is connected to the inner elastic band 22, is tightened and connected to the cabinet 1 by the connection means. The outer elastic band 23 surrounds the inner elastic band 22 at a certain constant distance. It is connected to the inner elastic band by elastic elements 24, which are generated by elastic band sections and which extend as an incline in reference to both elastic bands 22, 23. Sixteen of such elastic elements 24 are provided between the elastic bands 22, 23. In addition, one stabilisation element 25, which is generated by a band section, is provided in the middle of each breadth outside of the outer elastic band 23. Both stabilisation elements 25, which correspond to the stabilisation elements 4, generate cylindrical surfaces. This is seen in figure 8.

Figure 8 does not show, that the stabilisation elements 25 surround the projection pins 8 and are guided in their grooves 17. The outer elastic band 23 is tightened and the inner elastic band 22, which is connected to the outer elastic band 23 by the elastic elements 24, carries the speaker enclosure 1. As a result, the speaker enclosure 2 is floatingly suspended.

## Claims

1. An electronic device, such as a television set, with a cabinet (1) and with at least one speaker enclosure (2) which is connected to the cabinet (1) by connection means and by elastic means **characterized in that** the speaker enclosure (1) is floatingly suspended by the elastic means, which suspends the speaker enclosure (2) and which are connected to the cabinet (1) by the connection means.

2. The electronic device according to claim 1 **characterized in that** the elastic means comprise a single elastic band (3), which suspends the speaker enclosure (2) by surrounding it and which is tightened and connected with the cabinet (1) by the connection means.

3. The electronic device according to claim 1 **characterized in that** the elastic means comprise an inner elastic band (22), which suspends the speaker enclosure (2) by surrounding it, and an outer elastic band (23), which is connected to the inner elastic band (22) and which is tightened and connected to the cabinet (1) by the connection means.

4. The electronic device according to claim 3 **characterized in that** the outer elastic band (23) is connected to the inner elastic band (23) by elastic elements (24), which are generated by elastic band sections.

5. The electronic device according to one of the claims 1 to 4 **characterized in that** the connection means comprise tension elements, which tighten the elastic means and which project from the cabinet (1).

6. The electronic device according to claim 5 **characterized in that** the connection means comprise supporting elements, which are arranged to the tension elements.

7. The electronic device according to one of the claims 2 to 6 **characterized in that** the single elastic band (3) or the outer elastic band (23) comprises at least one guiding element (20) and the connection means comprise at least one corresponding tracking element (21), which projects from the cabinet (1) and guides the guiding element (20).

8. The electronic device according to one of the claims 2 to 7 **characterized in that** the elastic bands (3, 22, 23) are made by elastic soft rubber belts.

9. The electronic device according to one of the claims 1 to 8 **characterized in that** the elastic means, such as the single elastic band (3) or both of the inner and outer elastic bands (22, 23) together, are generated as one piece by an injection moulding of an elastomer.

10. The electronic device according to one of the claims 2 to 9 **characterized in that** the speaker enclosure (2) comprises a circumferential groove (7) guiding the surrounding elastic band (3, 22).
